# EUROPÄISCHE PATENTSCHRIFT

(11) **EP 2 780 093 B1**
(45) Veröffentlichungstag und Bekanntmachung des Hinweises auf die Patenterteilung: **28.08.2019**
(21) Anmeldenummer: 12784023.9
(22) Anmeldetag: 14.11.2012
(51) Int. Cl.: B01D 3/32, B01F 3/04, B01D 3/22, B01D 3/18, B01D 3/16

(54) **BODEN FÜR EINE STOFFAUSTAUSCHKOLONNE**
BASE FOR A MASS TRANSFER COLUMN
PLATEAU POUR UNE COLONNE DE TRANSFERT DE MASSE

(30) Priorität: 14.11.2011 EP 11188931; 14.11.2011 US 201161559157 P
(43) Veröffentlichungstag der Anmeldung: 24.09.2014
(73) Patentinhaber: BASF SE, 67056 Ludwigshafen am Rhein (DE)
(72) Erfinder: BECHTEL, Marcus, 69123 Heidelberg (DE); FRIEDRICH, Holger, 67549 Worms (DE); BAUMANN, Dieter, 67346 Speyer (DE); MÜLLER, Sacha, 67071 Ludwigshafen (DE)
(74) Vertreter: BASF IP Association
(86) Internationale Anmeldenummer: PCT/EP2012/072587
(87) Internationale Veröffentlichungsnummer: WO 2013/072353

(56) Entgegenhaltungen:
- WO-A1-2008/132096
- US-A- 3 168 600
- US-A- 3 434 701

## Beschreibung

Die Erfindung betrifft einen Boden einer Stoffaustauschkolonne mit Gasdurchtrittsöffnungen, die über den Boden verteilt angeordnet sind, sowie mindestens einem Leitblech zur Strömungsumlenkung von auf dem Boden strömender Flüssigkeit, wobei der Boden über mindestens einen Zulauf mit einer Flüssigkeit beschickt werden kann.

Stoffaustauschkolonnen sind zum Beispiel Destillationskolonnen, Absorptionskolonnen oder Strippkolonnen, in denen eine Stofftrennung durch intensiven Kontakt von flüssiger und gasförmiger Phase erfolgt. Die flüssige Phase läuft dabei von oben nach unten durch die Kolonne, die Gasphase steigt von unten nach oben durch die Kolonne. Durch geeignete Einbauten werden beide Phasen in Kontakt gebracht. Als Einbauten werden zum Beispiel ungeordnete Füllkörper, in der Regel als Schüttung, geordnete Packungen oder Böden eingesetzt. Die Böden sind dabei häufig als Querstromböden ausgeführt, bei denen die Flüssigkeit auf einer Seite dem Boden zugeführt wird, über dem Boden läuft und über einem der Zuführung gegenüberliegenden Ablaufschacht von dem Boden abläuft. Im Boden sind Stoffaustauschelemente aufgenommen, durch die das Gas durch die Flüssigkeit aufsteigt. Der Bereich, in dem das Gas dem Boden zugeführt wird, wird auch als "aktive Fläche" bezeichnet. Im Zulaufschacht beziehungsweise im Ablaufschacht erfolgt eine Trennung von Flüssigkeit und mitgerissenem Gas. Die Ablaufschächte dienen somit als Führung entgaster Flüssigkeit von einem Boden zu dem darunter liegenden Boden.

Als Stoffaustauschelemente auf Querstromböden werden zum Beispiel Sieblöcher, feststehende Ventile, bewegliche Ventile, Glocken oder Tunnel eingesetzt. In Abhängigkeit vom Anwendungsfall, beispielsweise in Abhängigkeit von Stoffdaten, Gas- und Flüssigkeitsmengen, Prozessrahmenbedingungen sowie zulässigen Temperaturen oder Drücken, werden die dafür geeigneten Stoffaustauschelemente vom Fachmann ausgewählt. Siebböden und Ventilböden sind in der Regel nicht hydraulisch abgedichtet.

Die fehlende hydraulische Abdichtung von Siebböden und Ventilböden führt dazu, dass die Flüssigkeit vor Erreichen des Ablaufschachtes durch das Stoffaustauschelement auf den unteren Boden abregnen kann. Dieser Bypass der Flüssigkeit führt zu einer Reduktion des Kontakts zwischen Gas und Flüssigkeit und ist deshalb unerwünscht. Der unerwünschte Bypass kann verhindert werden, indem die Gasbelastung im Austauschelement so groß gewählt wird, dass das Aufwärtsströmen der Gase ein vorzeitiges Abregnen verhindert. Das Öffnungsverhältnis der Gasdurchtrittsfläche kann jedoch nicht beliebig reduziert werden, da bei reduzierter Gasdurchtrittsfläche der Druckverlust stark ansteigt, wodurch die Effektivität des Verfahrens beeinträchtigt wird.

Bei Böden mit langen Lauflängen der Flüssigkeit, zum Beispiel bei einem großen Durchmesser und damit einem großen Abstand zwischen Zulaufschacht und Ablaufschacht, oder wenn die Flüssigkeit durch entsprechende Anordnung von Leitblechen auf dem Boden vom Zulaufschacht zum Umlaufschacht umgelenkt wird, stellt sich ein Flüssigkeitsgradient von der Zulaufseite bis zur Ablaufseite ein. Beispiele sind aus US 3 168 600 und DD 86 168 bekannt. Als Flüssigkeitsgradient wird in diesem Zusammenhang die Abnahme des statischen Druckverlustanteils mit der Lauflänge verstanden. Insbesondere bei Böden, auf denen der Strömungsweg der Flüssigkeit aufgrund von Leitblechen oder anderen Strömungsführungen verlängert ist, neigt der Boden zu ungleichmäßiger Begasung und infolge dessen zum Abregnen im Zulaufbereich.

Eine große Lauflänge der Flüssigkeit kann jedoch erwünscht sein, zum Beispiel um eine ausreichend hohe Kontaktzeit von Flüssigkeit mit dem Gas zu erhalten. Hierzu ist es zum Beispiel aus DE-A 10 2007 036 180 bekannt, auf einem Boden Zulaufschacht und Ablaufschacht auf der gleichen Seite anzuordnen und mittig zwischen Zulaufschacht und Ablaufschacht ein Leitblech vorzusehen, um welches die Flüssigkeit auf dem Boden umgelenkt wird. Eine weitere Verlängerung des Strömungsweges kann zum Beispiel dadurch erfolgen, dass eine größere Anzahl an Leitblechen vorgesehen wird, so dass die Flüssigkeit mäandernd über den Boden läuft.

Wenn in der Stoffaustauschkolonne ein Prozess durchgeführt wird, bei dem Wärme zu- oder abgeführt werden muss, ist es bekannt, auf den Böden Wärmeübertragungselemente, beispielsweise in Form von von einem Temperiermedium durchströmten Rohren, vorzusehen. Zur Maximierung der Wärmeaustauschfläche werden die zum Wärmeaustausch eingesetzten Rohrleitungen möglichst lang auf dem Boden geführt und die Flüssigkeit wird auf dem Boden mit Hilfe von Leitblechen entlang dieser Rohre geleitet. Die Lauflänge wird hierdurch bewusst deutlich verlängert. Dieser Effekt wird bei großen Kolonnendurchmessern noch verstärkt. Bei Verwendung von Rohrleitungen zum Wärmeaustausch auf den Böden hat sich gezeigt, dass eine gleichmäßige Begasung des Bodens zusätzlich behindert wird und daher vermehrt Durchregnen auftritt. Um Wärme aus der Flüssigkeit abzuführen beziehungsweise der Flüssigkeit auf dem Boden Wärme zuzuführen, werden üblicherweise die vom Temperiermedium durchströmten Rohre in mehreren Lagen mit parallel liegenden Rohren angeordnet. Üblicherweise werden 1 bis 4 Lagen, die jeweils 4 bis 20 parallele Rohre umfassen, eingesetzt. Entsprechende Böden in Stoffaustauschkolonnen, auf denen Wärmeübertragungselemente in Form von Rohren angeordnet sind, sind zum Beispiel in WO-A 2008/132096 beschrieben.

Die Zufuhr der Flüssigkeit auf den Boden wird üblicherweise durch Überströmen der Flüssigkeit über ein Zulaufwehr realisiert. Das Zulaufwehr weist dabei im Allgemeinen eine Höhe zwischen 15 bis 250 mm auf. Wenn Wärmeübertragungselemente auf dem Boden vorgesehen sind, muss die Flüssigkeit seitlich zwischen den einzelnen Wärmeübertragungselementen hindurch strömen, um in den Bereich der Längsströmung zu gelangen. Hier hat sich gezeigt, dass sowohl bei längs angeströmten Wärmeübertragungselementen als auch bei quer angeströmten Wärmeübertragungselementen die Begasung des Bodens der Stoffaustauschkolonne stark erschwert wird und der Boden über eine längere Flüssigkeitsstrecke dauerhaft abregnet. Diese Neigung der Stoffaustauschkolonne zum Durchregnen wird mit kleinerer Belastung, insbesondere im Teillastbereich, immer größer.

Aufgabe der vorliegenden Erfindung ist es daher, einen Boden für eine Stoffaustauschkolonne bereit zu stellen, bei dem das Durchregnen von Flüssigkeit dauerhaft minimiert wird. Aufgabe ist es weiterhin, den Arbeitsbereich der Stoffaustauschkolonne nach unten zu vergrößern, das heißt die Stoffaustauschkolonne auch im Teillastbereich möglichst ohne oder nur mit geringem Durchregnen von Flüssigkeit zu betreiben.

Gelöst wird die Aufgabe durch einen Boden für eine Stoffaustauschkolonne mit Gasdurchtrittsöffnungen, die über dem Boden verteilt angeordnet sind, sowie mindestens einem Leitblech zur Strömungsumlenkung von auf dem Boden strömender Flüssigkeit, wobei der Boden über mindestens einen Zulauf mit einer Flüssigkeit beschickt werden kann, wobei der Boden mindestens einen Zulauf, mindestens ein Trennwehr, das die einströmende Flüssigkeit in zwei Ströme trennt, und mindestens zwei Abläufe aufweist oder mindestens zwei Zuläufe und mindestens einen Ablauf für die Flüssigkeit aufweist, wobei jeder Strom entlang eines Strömungsweges zu einem Ablauf strömt.

Durch die Aufteilung der Flüssigkeit in zwei Ströme werden die Lauflängen der Flüssigkeit auf dem Boden verkürzt. Hierdurch wird die Begasung des Bodens im Einlaufbereich der Flüssigkeit vereinfacht, was zu einem gleichmäßigen Anspringen beim Anfahren der Stoffaustauschkolonne führt. Ein Abregnen von Flüssigkeit durch den Boden und die damit verbundene Trennleistungsverschlechterung durch einen Bypass der Flüssigkeit auf den nächsten Boden kann auf diese Weise wirksam reduziert werden. Der Arbeitsbereich der Böden wird auf diese Weise nach unten erweitert, so dass auch der Betrieb bei kleinerer Teillast möglich ist.

In einer bevorzugten Ausführungsform sind die Strömungswege auf dem Boden so gestaltet, dass die Länge jedes Strömungsweges im Wesentlichen gleich ist. Durch die im Wesentlichen gleiche Länge der Strömungswege wird gewährleistet, dass die über den Boden strömende Flüssigkeit unabhängig vom eingeschlagenen Strömungsweg eine vergleichbare Verweilzeit auf dem Boden aufweist und so gleich behandelt wird, so dass zum Beispiel in einer Absorptionskolonne die austretende Flüssigkeit unabhängig vom eingeschlagenen Weg jeweils eine im Wesentlichen gleiche Zusammensetzung aufweist.

Um die Länge der Strömungswege im Wesentlichen gleich zu gestalten, ist es besonders bevorzugt, wenn durch das Trennwehr auf dem Boden zwei Strömungswege gebildet werden, die symmetrisch zueinander sind. Hierzu dient das Trennwehr zum Beispiel als Symmetrieachse.

In einer Stoffaustauschkolonne, die den erfindungsgemäßen Boden enthält, ist es zum einen möglich, jeweils gleichgestaltete Böden übereinander vorzusehen, wobei in diesem Fall die mindestens zwei Abläufe eines Bodens zum Zulauf für den nächsten Boden zusammengeführt werden. Bevorzugt ist es jedoch, jeweils wechselweise Böden vorzusehen, bei denen jeweils die Abläufe des oberen Bodens als Zulauf für den unteren Boden genutzt werden. So befindet sich jeweils oberhalb und unterhalb eines Bodens mit einem Ablauf und zwei Zuläufen ein Boden mit zwei Abläufen und einem Zulauf.

Wenn mehr als zwei Strömungswege vorgesehen sind, können zum Beispiel wechselweise übereinanderliegend Böden mit einem Zulauf und mehreren Abläufen und darunter mit mehreren Zuläufen und einem Ablauf angeordnet sein, wobei die Anzahl der Abläufe beziehungsweise der Zuläufe jeweils der Anzahl der Strömungswege entspricht. Die Gestaltung ist dabei vorzugsweise derart, dass jeweils die Abläufe eines Bodens die Zuläufe für den darunterliegenden Boden bilden. Besonders bevorzugt ist es weiterhin, wenn sich die Strömungswege auf den einzelnen Böden entsprechen, so dass die Flüssigkeit auf den Böden jeweils wechselweise in entgegengesetzter Richtung strömt.

Zur Begasung der einzelnen Böden können als Gasdurchtrittsöffnungen zum Beispiel Sieblöcher, Glocken, Tunnel, feststehende Ventile oder bewegliche Ventile vorgesehen sein. Besonders bevorzugt ist es, wenn die Gasdurchtrittsöffnungen Sieblöcher sind. Die Anzahl und der Durchmesser der einzelnen Sieblöcher ist dabei abhängig von der Menge des Gases, die durch die Kolonne geleitet wird und weiterhin auch vom Durchmesser der Kolonne und damit vom Durchmesser der Böden.

Wenn in der Kolonne ein Stoffaustauschprozess geführt wird, bei dem Wärme freigesetzt wird oder bei dem Wärme zugeführt werden muss, ist es weiterhin bevorzugt, auf dem Boden Wärmeübertragungselemente anzuordnen. Die Wärmeübertragungselemente sind dabei vorzugsweise entlang der Strömungswege auf dem Boden angeordnet. Durch die Anordnung der Wärmeübertragungselemente entlang dem Strömungsweg auf dem Boden strömt die Flüssigkeit entlang der Wärmeübertragungselemente und kann so durch die Wärmeübertragungselemente entweder beheizt oder gekühlt werden.

Als Wärmeübertragungselemente eignen sich alle beliebigen Wärmeübertragungselemente, die dem Fachmann bekannt sind. So können zum Beispiel elektrisch beheizte Wärmeübertragungselemente zum Heizen vorgesehen sein. Bevorzugt ist es jedoch, als Wärmeübertragungselemente Rohrleitungen vorzusehen, die von einem Temperiermedium durchströmt werden. Die Rohrleitungen erstrecken sich dabei besonders bevorzugt parallel zum Strömungsweg auf dem Boden.

Wenn ein Stoffaustauschprozess durchgeführt wird, bei dem Wärme frei wird, werden die Rohrleitungen von einem Kühlmittel durchströmt. Dieses weist eine Temperatur auf, die unterhalb der Temperatur der Flüssigkeit in der Kolonne liegt, so dass von dem Kühlmittel Wärme aufgenommen werden kann. Entsprechend wird bei einem Stoffaustauschprozess, bei dem Wärme zugeführt werden muss, ein heißes Temperiermedium durch die Rohre geleitet. Als Heizmittel eignet sich hier zum Beispiel Dampf.

Um die Wärmeaustauschfläche zu vergrößern ist es möglich, die Rohrleitungen auf dem Strömungsweg mäandernd zu verlegen. Hierbei strömt dann die Flüssigkeit auf dem Boden im Kreuz-Gegenstrom oder Kreuz-Gleichstrom zur Flüssigkeit in den Rohrleitungen. Bevorzugt ist es jedoch, die Rohrleitungen parallel zum Strömungsweg zu gestalten, so dass die Flüssigkeit auf dem Boden im Gleichstrom oder im Gegenstrom zum Temperiermedium in den Rohrleitungen strömt. Zur Vergrößerung der Wärmeaustauschfläche ist hierbei insbesondere bevorzugt, wenn auf dem Strömungsweg mehrere Rohrleitungen parallel nebeneinander verlaufen. Die mehreren parallel nebeneinander auf dem Strömungsweg verlaufenden Rohrleitungen bilden jeweils eine Lage. In Abhängigkeit von der Flüssigkeitshöhe auf dem Boden und dem Durchmesser der einzelnen Rohre ist es möglich, mehrere Lagen an Rohrleitungen übereinander vorzusehen. Hierbei können die Rohrleitungen fluchtend übereinander angeordnet sein oder jeweils zueinander versetzt.

In Abhängigkeit von der Breite des Strömungsweges auf dem Boden werden vorzugsweise 4 bis 20 Rohrleitungen parallel zueinander angeordnet, die dann eine Lage bilden. Besonders bevorzugt werden 6 bis 16 Rohre parallel nebeneinander angeordnet. Die Anzahl der Lagen an Rohrleitungen liegt vorzugweise im Bereich 1 bis 6, besonders bevorzugt bei 1 bis 4.

Um die Rohrleitungen mit einem Temperiermedium zu versorgen, ist es zum Beispiel möglich, einen Verteiler auf dem Boden anzuordnen, mit dem die Rohrleitungen verbunden sind und über den die Rohrleitungen mit dem Temperiermedium befüllt werden. Am anderen Ende der Rohrleitungen befindet sich ein Sammler, in dem das Temperiermedium gesammelt und von dem Boden abgezogen wird. Um das Temperiermedium zuführen zu können, sind dabei der Sammler und der Verteiler jeweils mit mindestens einem Anschluss durch die Wandung der Kolonne, in der der Boden aufgenommen ist, geführt. Dieser Sammler und Verteiler kann auch in die Kolonnenwand integriert werden. Hierbei sind die Rohre zum Beispiel fluiddicht durch eine Platte geführt und münden in einen Anschluss an der Kolonnenwand. Daraus ergibt sich eine bessere Zugänglichkeit und damit verbunden auch eine Reparaturmöglichkeit der Rohre von außen.

Die Rohrleitungen, die zum Temperieren eingesetzt werden, können sich zum einen über sämtliche Strömungswege auf einem Boden erstrecken, alternativ ist es jedoch auch möglich, dass jedem Strömungsweg separate Rohrleitungen zum Temperieren zugeordnet werden. Um eine möglichst einfache Konstruktion zu erhalten ist es jedoch bevorzugt, die Rohrleitungen so zu gestalten, dass jede Rohrleitung entlang sämtlicher Strömungswege verläuft. Hierdurch ist jeweils ein Anschluss zur Zufuhr des Temperiermediums und ein Anschluss zum Abführen des Temperiermediums ausreichend. Wenn auf jedem Strömungsweg separate Rohrleitungen vorgesehen sind, sind für jeden Strömungsweg auch jeweils die Anschlüsse für das Temperiermedium vorzusehen. Weiterhin ist es auch möglich, die Rohrleitungen über sämtliche Strömungswege auf einem Boden hin und wieder zurück zu führen, so dass Zulauf und Ablauf zu den Rohrleitungen nebeneinander positioniert sind. Diese Rohrleitungsführung führt zu einem geringeren Bedarf an Temperiermedium.

Um die Flüssigkeit auf dem Boden gleichmäßig führen zu können, ist es bevorzugt, wenn jeder Zulauf ein Zulaufwehr umfasst. Über das Zulaufwehr strömt die Flüssigkeit dann in die jeweiligen Strömungswege. Das Zulaufwehr weist vorzugsweise eine Höhe im Bereich von 15 bis 250 mm, insbesondere im Bereich von 25 bis 150 mm auf. Vorzugsweise ist das Zulaufwehr an seiner Oberseite mit einer strukturierten Kante versehen. Die strukturierte Kante kann zum Beispiel zickzack-förmig, wellenförmig oder in Form von Zinnen ausgebildet sein. Weiterhin ist es auch möglich, zum Zulauf der Flüssigkeit Fenster im Wehr vorzusehen. Die Fenster können dabei alternativ oder zusätzlich zur strukturierten Kante vorgesehen sein. Durch die Strukturierung der Kante und die Fenster wird eine gleichmäßige Verteilung der Flüssigkeit über die gesamte Breite des Zulaufwehres erreicht.

Die Höhe der Zacken, Wellen oder Zinnen beziehungsweise die Größe der Fenster ist dabei abhängig von der Menge der zu verteilenden Flüssigkeit. Vorzugsweise weisen die einzelnen Zacken der zickzack-förmigen Gestaltung, die einzelnen Wellen der wellenförmigen Gestaltung beziehungsweise die einzelnen Zinnen eine Höhe von 5 bis 50 mm, bevorzugt von 10 bis 25 mm auf.

Alternativ oder zusätzlich zur Verteilung der Flüssigkeit über ein Zulaufwehr ist es auch möglich, einen Flüssigkeitsverteiler vorzusehen, der oberhalb des Bodens angeordnet ist und Ausflussöffnungen aufweist, durch die die Flüssigkeit gleichmäßig auf die Strömungswege verteilt wird. Hierzu ist es notwendig, den Flüssigkeitsverteiler oberhalb der mindestens zwei Strömungswege so anzuordnen, dass alle Strömungswege über den Flüssigkeitsverteiler mit Flüssigkeit beströmt werden. Der Abstand der Unterseite des Flüssigkeitsverteilers und damit der Ausflussöffnungen zum Boden liegt vorzugsweise in einem Abstand von 1 bis 50 cm, bevorzugt von 5 bis 30 cm und besonders bevorzugt von 10 bis 15 cm oberhalb dem obersten Punkt der auf dem Boden angeordneten Wärmeübertragungselemente. Um den Flüssigkeitsverteiler an verändernde Anforderungen, beispielsweise durch unterschiedliche Flüssigkeitsbelastung in der Kolonne anpassen zu können, ist es möglich, den Flüssigkeitsverteiler zum Beispiel durch Gewindestangen einstellbar zu halten. Wenn ein entsprechender Flüssigkeitsverteiler vorgesehen ist, so ist dieser vorzugsweise oberhalb der auf dem Boden enthaltenen Flüssigkeit, der sogenannten Sprudelschicht, positioniert.

Der Flüssigkeitsverteiler ist zum Beispiel so gestaltet, dass dieser ein mit den Auslassöffnungen versehenes Gehäuse umfasst, wobei in dem Gehäuse ein Überlaufbehälter angeordnet ist, dem die zu verteilende Flüssigkeit zugeführt wird. Die Flüssigkeit läuft dann aus dem Überlaufbehälter in das Gehäuse und wird von dort über die Auslassöffnungen auf den darunterliegenden Boden verteilt.

Ein solcher Flüssigkeitsverteiler ist zum Beispiel in EP-A 2008/054855 beschrieben. Der Einsatz eines solchen Flüssigkeitsverteilers, der ein verbessertes Anspringverhalten und einen größeren Lastbereich in Richtung Teillast bringt, führt in Kombination mit dem erfindungsgemäßen Boden zu einer zusätzlichen Erweiterung der Teillastfähigkeit.

Die Erfindung betrifft weiterhin eine Stoffaustauschkolonne, die mindestens einen der erfindungsgemäß ausgebildeten Böden enthält. Bevorzugt ist jeder Boden in der Stoffaustauschkolonne wie vorstehend beschrieben ausgeführt. Besonders bevorzugt ist die Stoffaustauschkolonne so gestaltet, dass jeweils abwechselnd Böden mit zwei Abläufen und einem Zulauf beziehungsweise zwei Zuläufen und einem Ablauf übereinander angeordnet sind, wobei jeweils die Abläufe des oberen Bodens die Zuläufe des Bodens darunter bilden.

Jeder Ablauf eines Bodens umfasst einen Ablaufbereich mit mindestens einem Ablaufschacht, durch den die Flüssigkeit in den Zulauf des darunter liegenden Bodens geleitet wird. Der Ablaufschacht endet dabei im durch das Zulaufwehr abgegrenzten Zulauf oder im Flüssigkeitsverteiler. Die Ablaufschächte im Ablaufbereich können dabei beliebig angeordnet sein. So können zum Beispiel zwei Ablaufschächte vorgesehen sein, die sich an gegenüberliegenden Seiten des Ablaufbereichs befinden. Alternativ können auch zwei oder mehr Ablaufschächte nebeneinander auf einer Seite des Ablaufbereichs liegen. Auch ist es möglich, nur einen Ablaufschacht im Ablaufbereich vorzusehen. Auch ist es möglich, für jeden Strömungsweg einen Ablaufschacht vorzusehen, wobei alle Ablaufschächte dann in einem gemeinsamen Zulauf für den darunter liegenden Boden münden. Bei einem Ablauf von einem Boden ist es bevorzugt, die Flüssigkeit der einzelnen Strömungswege im Ablaufbereich zu mischen, bevor diese auf den nächsten Boden aufgeben wird. Die Mischung kann dabei auch dadurch erfolgen, dass nur ein gemeinsamer Ablaufschacht vorgesehen ist. Zur Unterstützung der Mischung ist es weiterhin möglich, statische Mischelemente im Ablaufbereich oder im Ablaufschacht vorzusehen.

Die erfindungsgemäß ausgebildete Kolonne mit den erfindungsgemäßen Böden wird vorzugsweise zur Herstellung von Salpetersäure eingesetzt. Hierbei dient die Kolonne als Absorptionskolonne, wobei die Absorptionswärme, die in der Absorptionskolonne während des Betriebes entsteht, durch die auf dem Boden angeordneten Wärmeübertragungselemente, die in diesem Fall als Kühlelement gestaltet sind, abgeführt wird.

Für die Herstellung von Salpetersäure wird zunächst Ammoniak mit Luft an Platin-Netzen katalytisch zu Kohlenmonoxid und Wasser verbrannt. Diese Reaktion wird auf vollständigen Umsatz mit einem Überschuss an Sauerstoff durchgeführt. Das Stickstoffmonoxid wird durch den überschüssigen Sauerstoff homogen weiter zu Stickstoffdioxid oxidiert.

Das Stickstoffdioxid wird der Absorptionskolonne als Gasstrom zugeführt. Als Flüssigkeit wird der Absorptionskolonne am Kopf Wasser zugegeben. In der Kolonne wird das Stickstoffdioxid vom Wasser absorbiert, wobei Salpetersäure und Stickstoffmonoxid entsteht.

In der Absorptionskolonne laufen eine Vielzahl von Reaktionen, sowohl in der Gasphase als auch in der Flüssigphase ab. Die auftretenden Reaktions- und Absorptionswärmen werden über die Wärmeübertragungselemente auf den Böden abgeführt. Durch die Abfuhr der Wärme werden die Gleichgewichte der einzelnen Reaktionen geeignet verschoben. Zudem müssen die NOₓ-Verluste am Kopf der Absorptionskolonne minimiert werden. Das Erreichen der Spezifikationen der Produkte, die aus der Kolonne entnommen werden, hängt stark vom Design der Kolonne ab. Durch Verwendung einer Absorptionskolonne mit den erfindungsgemäßen Böden wird bei der Herstellung von Salpetersäure ein Abregnen von Flüssigkeit stark verringert und eine Erweiterung des Arbeitsbereichs nach unten erreicht, wodurch die Teilastfähigkeit verbessert wird.

Die Zugabe der Flüssigkeit in die Kolonne kann zum Beispiel über eine externe Feedzugabe oder eine Zugabe über einen internen Flüssigkeitsstrom, beispielsweise einen Ablaufschacht oder einen Ringkanal oder ähnliches erfolgen. Dabei gelangt die Flüssigkeit über ein Zulaufrohr in den Überlaufbehälter, beispielweise von außerhalb der Kolonne und/oder über den Ablaufschacht eines darüber liegenden Bodens oder zum Beispiel durch ein Rohr aus einem Ringkanal.

Um eine Bypass-Strömung des Gases durch den Schacht zu verhindern, ist es notwendig, den Ablaufschacht beziehungsweise das Rohr des Ringkanals gasdicht abzuschließen.

Hierzu wird der Überlaufbehälter in dem Gehäuse installiert. In den Überlaufbehälter taucht der Ablaufschacht unter den Flüssigkeitsstand ein. Der Ablaufschacht taucht dabei vorzugsweise zwischen 10 bis 200 mm, bevorzugt zwischen 20 bis 100 mm und besonders bevorzugt von 30 bis 50 mm in die Flüssigkeit ein. Der Flüssigkeitsstand im Überlaufbehälter wird durch die Höhe des Überlaufbehälters festgelegt. Hierdurch wird sichergestellt, dass der Ablaufschacht beziehungsweise das vom Ringkanal mündende Rohr unabhängig vom Flüssigkeitsstand im Gehäuse abgedichtet ist. Der Höhenabstand des Überlaufbehälters zum Gehäuse sollte 10 bis 250 mm, bevorzugt 20 bis 150 mm und besonders bevorzugt 10 bis 100 mm betragen. Der Überlaufbehälter weist an den Oberkanten vorzugsweise eine Reihe von Überlaufzacken mit einer Höhe von 2 bis 20 mm, bevorzugt 10 bis 15 mm auf, um eine gleichmäßige Verteilung der Flüssigkeit in das Gehäuse zu erreichen.

Mit dem Flüssigkeitsverteiler sollte die Flüssigkeit bevorzugt am entferntesten Punkt des Flüssigkeitsabzuges möglichst gleichmäßig über die Wärmeübertragungselemente an deren Zuleitung beziehungsweise Ableitung des Wärmeträgermediums verteilt werden. Bei Wärmeübertragungselementen, die sich mäandernd entlang der Strömungswege erstecken, erfolgt die Flüssigkeitszufuhr vorzugsweise mittig über den Wärmeübertragungselementen.

Durch die Verwendung einer Flüssigkeitsabtauchung wird wirksam verhindert, dass Gas durch den Ablaufschacht als Bypass aufsteigt. Es wird sichergestellt, dass das gesamte Gas durch die Gasdurchtrittsöffnungen im Boden strömt. Die Flüssigkeitsabtauchung wird dadurch realisiert, dass der mindestens eine Ablaufschacht unterhalb des Flüssigkeitsspiegels im Zulauf des darunter liegenden Bodens endet.

Ausführungsbeispiele der Erfindung sind in den Figuren dargestellt und werden in der nachfolgenden Beschreibung näher erläutert.

Es zeigen:
Figur 1 eine dreidimensionale Darstellung eines erfindungsgemäß ausgebildeten Bodens mit zwei Strömungswegen,
Figur 2 eine Draufsicht auf einen erfindungsgemäß ausgebildeten Boden mit zwei Strömungswegen,
Figur 3 eine schematische Darstellung eines Flüssigkeitsverteilers in Seitenansicht,
Figur 4 eine schematische Darstellung des Flüssigkeitsverteilers aus Figur 3 in Draufsicht

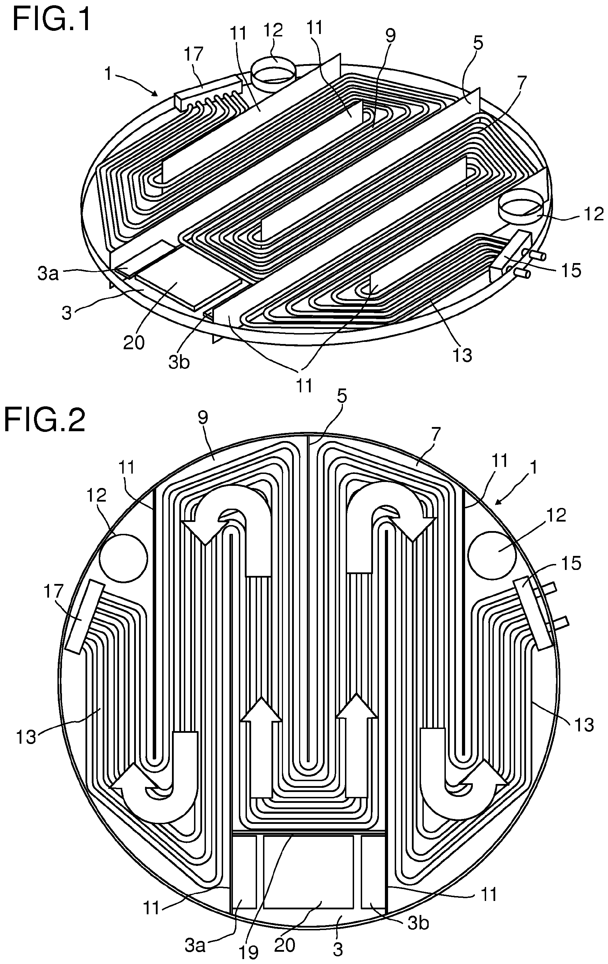

Figur 1 zeigt eine dreidimensionale Darstellung eines erfindungsgemäß ausgebildeten Bodens mit zwei Strömungswegen.

Ein erfindungsgemäß ausgebildeter Boden 1 weist einen Zulauf mit einem Zulaufbereich 3 auf, über den der Boden 1 mit einer Flüssigkeit beschickt wird. Hierzu strömt die Flüssigkeit aus dem Zulaufbereich 3 auf den Boden 1. Der Zulaufbereich 3 wird dabei vorzugsweise durch ein Zulaufwehr begrenzt. Erfindungsgemäß wird die Flüssigkeit durch ein Trennwehr 5 in einen ersten Strömungsweg 7 und einem zweiten Strömungsweg 9 getrennt. In der hier dargestellten Ausführungsform sind der erste Strömungsweg 7 und der zweite Strömungsweg 9 achssymmetrisch zum Trennwehr 5 ausgebildet.

Jeder der Strömungswege 7, 9 weist in der hier dargestellten Ausführungsform zwei Leitbleche 11 auf, um die die Flüssigkeit umgelenkt wird, so dass diese einen mäandernden Weg zurücklegt. Am Ende des Strömungsweges 7, 9 findet sich ein Ablaufschacht 12. Durch den Ablaufschacht 12 strömt die Flüssigkeit vom Boden ab auf einen darunterliegenden Boden oder in den Sumpf, aus dem die Flüssigkeit dann entnommen werden kann. Wenn sich unter dem Boden ein weiterer Boden befindet, sind die Ablaufschächte 12 gleichzeitig die Zuläufe für den darunter liegenden Boden.

Erfindungsgemäß befinden sich auf dem Boden weiterhin Wärmeübertragungselemente 13, die in der hier dargestellten Ausführungsform als Rohrleitungen gestaltet sind. Die Wärmeübertragungselemente 13 werden genutzt, um bei einem auf dem Boden durchgeführten Stoffaustauschprozess entstehende Wärme abzuführen oder für einen Stoffaustauschprozess benötigte Wärme zuzuführen. Bei der Verwendung der Stoffaustauschkolonne mit dem erfindungsgemäßen Boden 1 bei der Herstellung von Salpetersäure wird Absorptionswärme frei, die dann über die Wärmeübertragungselemente 13 abgeführt werden kann. Um eine ausreichend große Wärmeübertragungsfläche zu erhalten, laufen mehrere Rohrleitungen als Wärmeübertragungselemente 13 parallel über die auf dem Boden 1 ausgebildeten Strömungswege 7, 9 von einem Verteiler 15, über den ein Temperiermedium auf die Rohrleitung aufgegeben wird zu einem Sammler 17. Im Sammler 17 läuft das Temperiermedium aus sämtlichen Rohrleitungen zusammen und kann dann vom Boden abgezogen werden.

Neben der hier dargestellten Ausführungsform, bei der eine Lage an Rohrleitungen, die nebeneinander positioniert sind, angeordnet ist, ist es auch möglich, mehr als eine Lage Rohrleitungen übereinander zu positionieren. Hierbei können die Rohrleitungen übereinander jeweils fluchtend oder auch versetzt zueinander angeordnet sein. Die Anzahl der Lagen an Rohrleitungen, die eingesetzt werden ist dabei abhängig vom Durchmesser der Rohre und von der Höhe der Flüssigkeitsspiegels auf dem Boden im laufenden Betrieb. Die Anzahl der Lagen an Rohrleitungen ist dabei so zu wählen, dass sämtliche Rohrleitungen im Betrieb immer von Flüssigkeit überdeckt sind.

Eine Draufsicht auf den erfindungsgemäß ausgebildeten Boden mit zwei Strömungswegen ist in Figur 2 dargestellt.

Über den Zulaufbereich 3, der über zwei Ablaufschächte 3a, 3b aus einem darüberliegenden Boden mit Flüssigkeit beschickt wird, wird dem Boden 1 die Flüssigkeit zugeführt. Die Flüssigkeit strömt über ein Zulaufwehr 19 auf den Boden 1. Eine gleichmäßige Verteilung der Flüssigkeit über die gesamte Breite des Zulaufwehres 19 wird erzielt, indem das Zulaufwehr 19 an seiner Oberkante eine strukturierte Kante aufweist. Die Kante kann zum Beispiel zickzack-förmig, wellenförmig oder in Form von Zinnen gestaltet sein. Alternativ ist es auch möglich, Fenster im Zulaufwehr 19 vorzusehen, durch die die Flüssigkeit verteilt werden wird.

Neben der hier dargestellten Variante mit zwei im Zulaufbereich 3 endenden Ablaufschächten 3a, 3b des darüber liegenden Bodens, die an zwei gegenüberliegenden Seiten des Zulaufbereichs 3 angeordnet sind, ist es auch möglich, einen oder mehrere Ablaufschächte parallel zum Zulaufwehr 19 im Zulaufbereich 3 anzuordnen oder die Ablaufschächte entlang der Kolonnenwand zu positionieren. Um ein Aufsteigen von Gas durch die Ablaufschächte 3a, 3b zu vermeiden, enden diese vorzugsweise unterhalb des Flüssigkeitsspiegels im Zulaufbereich 3. Entsprechend enden auch die Ablaufschächte 12 unterhalb des Flüssigkeitsspiegels des Zulaufs des darunter liegenden Bodens, um einen Gasdurchtritt zu vermeiden.

Nach dem Überströmen des Zulaufwehres 19 wird die Flüssigkeit auf die zwei Strömungswege 7, 9 verteilt. Die Strömung der Flüssigkeit ist hier mit Pfeilen dargestellt und läuft vom Zulauf 3 über das Zulaufwehr 19 entlang des ersten Strömungsweges 7 beziehungsweise des zweiten Strömungsweges 9 zum jeweils zugeordneten Ablaufschacht 12.

Wenn sich unter dem Boden 1 in der Kolonne ein weiterer Boden befindet, so ist es besonders bevorzugt, wenn dieser an den Positionen, an denen der hier dargestellte Boden die Ablaufschächte 12 aufweist, jeweils einen Zulauf umfasst. Die Flüssigkeit strömt dann über den jeweiligen Zulauf in den ersten Strömungsweg 7 beziehungsweise zweiten Strömungsweg 9 und strömt entgegen der in Figur 2 dargestellten Richtung entlang der Strömungswege 7, 9. Die Flüssigkeit wird dann in einem Ablauf gesammelt, der an der Position liegt, an der in Figur 2 darstellten Ausführungsform der Zulauf ist. Entsprechend ist auch ein über dem hier dargestellten Boden positionierter Boden aufgebaut.

In der in den Figuren 1 und 2 dargestellten Ausführungsform befindet sich im Zulaufbereich 3 zusätzlich eine Durchstiegsöffnung 20, die im Betrieb verschlossen ist.

Neben der in Figur 1 und 2 dargestellten Ausführungsform mit zwei symmetrischen Strömungswegen ist es alternativ auch möglich, mehr als zwei Strömungswege vorzusehen oder die Strömungswege nicht symmetrisch zu gestalten. Es ist jedoch vorteilhaft, unabhängig von der Anzahl und Gestaltung der Strömungswege die einzelnen Strömungswege jeweils im Wesentlichen gleich lang auszubilden.

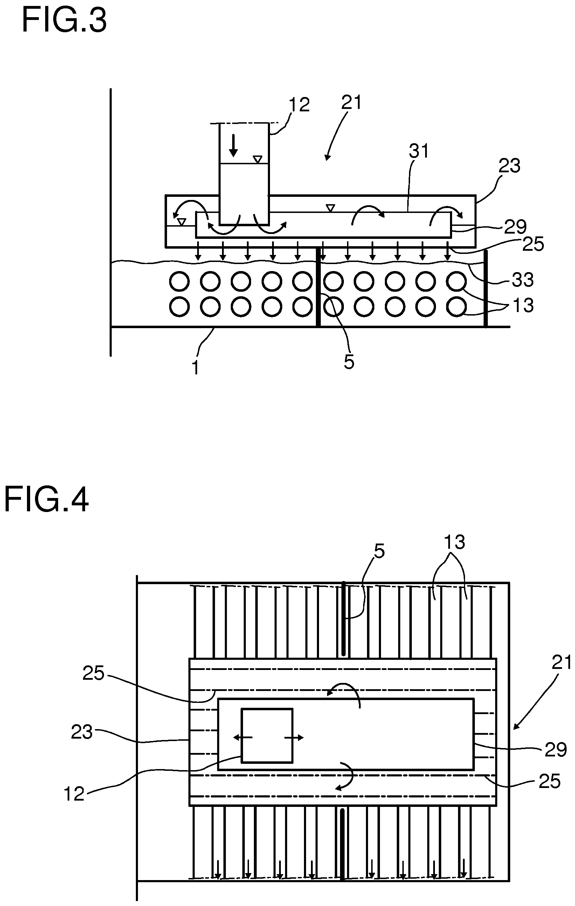

Alternativ zum Zulauf der Flüssigkeit über ein Zulaufwehr 19, wie es in Figur 2 dargestellt ist, ist auch die Flüssigkeitsverteilung über einen Flüssigkeitsverteiler möglich. Ein solcher Flüssigkeitsverteiler ist schematisch in Figur 3 in Seitenansicht und in Figur 4 in Draufsicht dargestellt.

Ein Flüssigkeitsverteiler 21 umfasst ein Gehäuse 23, an dessen Unterseite sich Ausflussöffnungen 25 befinden, die hier schematisch durch Pfeile dargestellt sind. Die Ausflussöffnungen können zum Beispiel in Reihen am Boden des Gehäuses 23 angeordnet sein. Hierbei ist es möglich, die Ausflussöffnungen 25 beispielsweise in Form von einzelnen Löchern mit rundem Querschnitt oder auch als Schlitze zu gestalten. Um eine gleichmäßige Verteilung der Flüssigkeit zu erzielen sind die Ausflussöffnungen 25 gleichmäßig über dem Boden des Gehäuses 23 verteilt angeordnet.

Die über dem Flüssigkeitsverteiler 21 zu verteilende Flüssigkeit wird über einen Ablaufschacht 12 einem Überlaufbehälter 29 zugeführt. Wenn sich der Flüssigkeitsverteiler 21 über dem obersten Boden in der Kolonne befindet, wird die Flüssigkeit vorzugsweise über ein Eintauchrohr aus einem Flüssigkeitsverteiler zugeführt.

Der Ablaufschacht 12 taucht in den Überlaufbehälter 29 ein, so dass der Auslass aus dem Ablaufschacht 12 unterhalb des Flüssigkeitsspiegels 31 im Überlaufbehälter 29 angeordnet ist. Hierdurch wird eine Abdichtung gegenüber Gas in der Kolonne erzielt, so dass kein Gas in den Ablaufschacht 12 einströmen kann.

Die Flüssigkeit strömt anschließend aus dem Überlaufbehälter 29 in das Gehäuse 23 ein, in dem dieses über die Seitenwände des Überlaufbehälters 29 strömt. Aus dem Gehäuse 23 fließt die Flüssigkeit dann durch die Ausflussöffnungen 25 auf den Boden 1.

Um eine gleichmäßige Flüssigkeitsverteilung auf die einzelnen Strömungswege zu erhalten, befindet sich der Flüssigkeitsverteiler 21 vorzugsweise mittig oberhalb des Trennwehres 5.

In der in Figur 3 dargestellten Ausführungsform sind zur Temperierung der Flüssigkeit auf dem Boden 1 zwei Lagen an Wärmeübertragungselementen vorgesehen, wobei die Wärmeübertragungselemente jeweils in Form von Rohrleitungen gestaltet sind und fluchtend übereinander in den einzelnen Lagen angeordnet sind. Die Wärmeübertragungselemente 13 sind vollständig von der auf dem Boden 1 enthaltenen Flüssigkeit bedeckt. Der Flüssigkeitsspiegel der Flüssigkeit auf dem Boden 1 ist mit Bezugszeichen 33 bezeichnet.

Erfindungsgemäß ist der Flüssigkeitsverteiler 21 oberhalb des Flüssigkeitsspiegels 33 auf dem Boden 1 angeordnet. Die Flüssigkeit strömt somit zunächst aus dem Flüssigkeitsverteiler 21 durch die Ausflussöffnungen 25 durch Gas, bevor diese auf die Flüssigkeit auf dem Boden auftrifft. Die Strömung der Flüssigkeit in dem Flüssigkeitsverteiler ist schematisch jeweils mit Pfeilen in den Figuren 3 und 4 dargestellt.

Zur Verteilung der Flüssigkeit auf dem Boden sind die Ausflussöffnungen 25 vorzugsweise in 1 bis 30 Reihen, bevorzugt in 2 bis 20 Reihen und besonders bevorzugt in 3 bis 7 Reihen angeordnet. Hierbei weist jede der Reihen 10 bis 50, bevorzugt 20 bis 40 Löcher auf. Die einzelnen Reihen sind vorzugsweise parallel zu den Außenkanten des Gehäuses 23 angeordnet. Die Ausrichtung des Flüssigkeitsverteilers 21 ist dabei vorzugsweise so, dass die Reihen der Ausflussöffnungen 25 bevorzugt in einem Winkel von 30° bis 90° über die Längsrichtung der Rohre der Wärmeübertragungselemente 13 angeordnet sind. Diese Anordnung erlaubt eine möglichst gleichmäßige Verteilung der Flüssigkeit in Fließrichtung über alle parallelen Rohre 13.

Der Durchmesser der Ausflussöffnungen liegt vorzugsweise im Bereich von 1 bis 30 mm, mehr bevorzugt bei 5 bis 20 mm, besonders bevorzugt bei 7 bis 12 mm.

Um eine besonders gleichmäßige Flüssigkeitsverteilung zu gewährleisten ist es vorteilhaft, wenn das Gehäuse 23 eine Durchbiegung von maximal 2 mm an der Unterseite und eine Ebenheit des Niveaugefälles von weniger als 1 mm pro 1 m Länge aufweist. Diese Durchbiegung kann durchaus bei geeigneter Werkstoffwahl oder durch konstruktive Maßnahmen, beispielsweise Verstärkungsrippen, erhalten werden.

### Bezugszeichenliste

- 1: Boden
- 3: Zulauf
- 3a, 3b: Ablaufschacht
- 5: Trennwehr
- 7: Erster Strömungsweg
- 9: Zweiter Strömungsweg
- 11: Leitblech
- 12: Ablaufschacht
- 13: Wärmeübertragungselement
- 15: Verteiler
- 17: Sammler
- 19: Zulaufwehr
- 20: Durchstiegsöffnung
- 21: Flüssigkeitsverteiler
- 23: Gehäuse
- 25: Ausflussöffnungen
- 29: Überlaufbehälter
- 31: Flüssigkeitsspiegel
- 33: Flüssigkeitsspiegel auf dem Boden 1

## Patentansprüche

1. Boden für eine Absorptionskolonne zur Herstellung von Salpetersäure mit Gasdurchtrittsöffnungen, die über den Boden (1) verteilt angeordnet sind, sowie mindestens einem Leitblech (11) zur Strömungsumlenkung von auf dem Boden strömender Flüssigkeit, wobei der Boden (1) über mindestens einen Zulauf (3) mit einer Flüssigkeit beschickt werden kann, **dadurch gekennzeichnet, dass** der Boden mindestens einen Zulauf (3), mindestens ein Trennwehr (5), das die einströmende Flüssigkeit in zwei Ströme trennt, und mindestens zwei Abläufe (12) aufweist oder mindestens zwei Zuläufe (3) und mindestens einen Ablauf (12) für die Flüssigkeit aufweist, und wobei jeder Strom entlang eines separaten Strömungsweges (7; 9) vom Zulauf (3) zu einem Ablauf (12) strömt und wobei auf dem Boden (1) entlang der Strömungswege (7; 9) jeweils Wärmeübertragungselemente (13) angeordnet sind, die als Kühlelemente ausgebildet sind, sodass die Strömungswege (7; 9) so gestaltet sind, dass die Länge jedes Strömungsweges (7; 9) im Wesentlichen gleich ist.

2. Boden gemäß Anspruch 1, **dadurch gekennzeichnet, dass** zur Strömungsumlenkung Leitbleche (11) auf dem Boden (1) angeordnet sind, so dass durch die Leitbleche (11) mäandernde Strömungswege (7; 9) gebildet werden.

3. Boden gemäß einem der Ansprüche 1 bis 2, **dadurch gekennzeichnet, dass** auf dem Boden (1) durch das Trennwehr (5) zwei Strömungswege (7; 9) gebildet werden, die symmetrisch zueinander sind.

4. Boden gemäß einem der Ansprüche 1 bis 3, **dadurch gekennzeichnet, dass** die Gasdurchtrittsöffnungen Sieblöcher, Glocken, Tunnel, feststehende Ventile oder bewegliche Ventile sind.

5. Boden gemäß einem der Ansprüche 1 bis 4, **dadurch gekennzeichnet, dass** die Wärmeübertragungselemente (13) von einem Temperiermedium durchströmte Rohrleitungen sind.

6. Boden gemäß Anspruch 5, **dadurch gekennzeichnet, dass** sich die Rohrleitungen parallel zum Strömungsweg (7; 9) erstrecken.

7. Boden gemäß Anspruch 5 oder 6, **dadurch gekennzeichnet, dass** in jedem Strömungsweg (7; 9) jeweils 4 bis 20 parallel zueinander angeordnete Rohrleitungen eine Lage bilden und 1 bis 4 Lagen übereinander angeordnet sind.

8. Boden gemäß einem der Ansprüche 1 bis 7, **dadurch gekennzeichnet, dass** der Zulauf (3) ein Zulaufwehr (19) umfasst, über das die Flüssigkeit in die jeweiligen Strömungswege (7; 9) strömt.

9. Boden gemäß einem der Ansprüche 1 bis 8, **dadurch gekennzeichnet, dass** der Zulauf (3) einen Flüssigkeitsverteiler (21) umfasst, der oberhalb des Bodens (1) angeordnet ist und Ausflussöffnungen (25) aufweist, durch die die Flüssigkeit gleichmäßig auf die Strömungswege (7; 9) verteilt wird.

10. Boden gemäß Anspruch 9,
**dadurch gekennzeichnet, dass** der Flüssigkeitsverteiler (21) ein mit den Ausflussöffnungen (25) versehenes Gehäuse (23) umfasst, wobei in dem Gehäuse (23) ein Überlaufbehälter (29) angeordnet ist, dem die zu verteilende Flüssigkeit zugeführt wird.

11. Stoffaustauschkolonne zum intensiven Kontakt einer gasförmigen mit einer flüssigen Phase für die Herstellung von Salpetersäure, wobei die flüssige Phase über einen Flüssigkeitsverteiler am Kopf der Stoffaustauschkolonne und die Gasphase über einen Gasverteiler am Sumpf der Stoffaustauschkolonne zugegeben wird, am Kopf der Stoffaustauschkolonne eine Gasphase und am Sumpf der Stoffaustauschkolonne eine Flüssigphase entnommen wird, **dadurch gekennzeichnet, dass** die Stoffaustauschkolonne mindestens einen Boden gemäß einem der Ansprüche 1 bis 10 enthält.

12. Stoffaustauschkolonne gemäß Anspruch 11 **dadurch gekennzeichnet, dass** mindestens zwei Böden gemäß einem der Ansprüche 1 bis 12 umfasst sind, wobei immer abwechselnd jeweils ein Boden einen Zulauf und zwei Abläufe aufweist und ein direkt darunter beziehungsweise darüber liegender Boden zwei Zuläufe und einen Ablauf aufweist, wobei jeweils der mindestens eine Ablauf eines Bodens den Zulauf eines darunter liegenden Bodens bildet.

## Claims

1. A tray for an absorption column for preparing nitric acid, having gas passage openings distributed over the tray (1), and having at least one baffle (11) for flow diversion of liquid flowing on the tray, it being possible for the tray (1) to be fed with a liquid via at least one entry (3), wherein the tray has at least one entry (3), at least one separating weir (5), which separates the inflowing liquid into two streams, and at least two exits (12), or has at least two entries (3) and at least one exit (12) for the liquid, each stream flowing along a seperate flow path (7; 9) from the entry (3) to an exit (12) and heat transfer elements (13) which are designed as cooling elements being disposed on the tray (1) along the flow paths (7; 9) in each case so that the flow paths (7; 9) are designed so that the length of each flow path (7; 9) is substantially the same.

2. The tray according to claim 1, wherein baffles (11) are disposed on the tray (1) for flow diversion, so that flow paths (7; 9) meandering through the baffles (11) are formed.

3. The tray according to either of claims 1 and 2, wherein the separating weir (5) on the tray (1) forms two flow paths (7; 9) which are symmetrical to one another.

4. The tray according to any of claims 1 to 3, wherein the gas passage openings are sieve holes, bubble-caps, tunnel caps, fixed valves or moving valves.

5. The tray according to any of claims 1 to 4, wherein the heat transfer elements (13) are pipelines through which a temperature control medium flows.

6. The tray according to claim 5, wherein the pipelines extend parallel to the flow path (7; 9).

7. The tray according to claim 5 or 6, wherein 4 to 20 respective pipelines disposed parallel to one another form one layer in each flow path (7; 9), and 1 to 4 layers are disposed one above another.

8. The tray according to any of claims 1 to 7, wherein the entry (3) comprises an entry weir (19) via which the liquid flows into the respective flow paths (7; 9).

9. The tray according to any of claims 1 to 8, wherein the entry (3) comprises a liquid distributor (21) which is disposed above the tray (1) and has outlet openings (25) through which the liquid is distributed uniformly onto the flow paths (7; 9).

10. The tray according to claim 9, wherein the liquid distributor (21) comprises a housing (23) provided with the outflow openings (25), the housing (23) accommodating an overflow container (29) to which the liquid to be distributed is supplied.

11. A mass transfer column for intense contact of a gaseous phase with a liquid phase for preparing nitric acid, the liquid phase being added via a liquid distributor at the top of the mass transfer column and the gas phase being added via a gas distributor at the bottom of the mass transfer column, a gas phase being taken off at the top of the mass transfer column and a liquid phase being taken off at the bottom of the mass transfer column, wherein the mass transfer column comprises at least one tray according to any of claims 1 to 10.

12. The mass transfer column according to claim 11, comprising at least two trays according to any of claims 1 to 12, where each tray, always in alternation, has one entry and two exits, and a tray lying directly under it or over it has two entries and one exit, and in each case the at least one exit of one tray forms the entry of an underlying tray.

## Revendications

1. Plateau destiné à une colonne d'absorption pour la production d'acide nitrique, le plateau comportant des ouvertures de passage de gaz, qui sont réparties sur le fond (1), et au moins un déflecteur (11) destiné à dévier l'écoulement de liquide qui s'écoule sur le plateau, le plateau (1) pouvant être alimenté en liquide par au moins une entrée (3), **caractérisé en ce que** le plateau comprend au moins une entrée (3), au moins un déversoir de séparation (5) qui sépare en deux flux le liquide affluant, et au moins deux sorties (12) ou au moins deux entrées (3) et au moins une sortie (12) destinées au liquide, et chaque flux s'écoulant de l'entrée (3) à une sortie (12) le long d'un chemin d'écoulement séparé (7 ; 9) et des éléments de transfert de chaleur (13) étant disposés sur le plateau (1) le long des chemins d'écoulement (7 ; 9), lesquels éléments de transfert de chaleur sont conçus comme des éléments de refroidissement de sorte que les chemins d'écoulement (7 ; 9) sont conçus de manière à ce que la longueur de chaque chemin d'écoulement (7 ; 9) est sensiblement la même.

2. Plateau selon la revendication 1, **caractérisé en ce que** des déflecteurs (11) de déviation d'écoulement sont disposés sur le plateau (1) de manière à ce que les déflecteurs (11) forment des chemins d'écoulement en méandres (7, 9).

3. Plateau selon l'une des revendications 1 et 2, **caractérisé en ce que** le déversoir de séparation (5) forme sur le plateau (1) deux chemins d'écoulement (7 ; 9) symétriques l'un de l'autre.

4. Plateau selon l'une des revendications 1 à 3, **caractérisé en ce que** les ouvertures de passage de gaz sont des trous de criblage, des cloches, des tunnels, des clapets fixes ou des clapets mobiles.

5. Plateau selon l'une des revendications 1 à 4, **caractérisé en ce que** les éléments de transfert de chaleur (13) sont des conduites traversées par un agent de régulation de température.

6. Plateau selon la revendication 5, **caractérisé en ce que** les conduites s'étendent parallèlement au chemin d'écoulement (7 ; 9).

7. Plateau selon la revendication 5 ou 6, **caractérisé en ce que** 4 à 20 conduites, parallèles entre elles, forment une couche dans chaque chemin d'écoulement (7 ; 9) et **en ce que** 1 à 4 couches sont disposées les unes sur les autres.

8. Plateau selon l'une des revendications 1 à 7, **caractérisé en ce que** l'entrée (3) comprend un déversoir d'entrée (19) par lequel le liquide s'écoule jusque dans les chemins d'écoulement respectifs (7 ; 9).

9. Plateau selon l'une des revendications 1 à 8, **caractérisé en ce que** l'entrée (3) comprend un distributeur de liquide (21) qui est disposé au-dessus du plateau (1) et qui comporte des ouvertures de sortie (25) par lesquelles le liquide est uniformément réparti entre les chemins d'écoulement (7 ; 9).

10. Plateau selon la revendication 9, **caractérisé en ce que** le distributeur de liquide (21) comprend un boîtier (23) pourvu des ouvertures de sortie (25), un récipient de trop-plein (29), auquel le liquide à distribuer est amené, étant disposé dans le boîtier (23).

11. Colonne de transfert de matière destinée à la mise en contact intensive d'une phase gazeuse avec une phase liquide pour la production d'acide nitrique, la phase liquide étant ajoutée en haut de la colonne de transfert de matière par le biais d'un distributeur de liquide et la phase gazeuse étant ajoutée en bas de la colonne de transfert de matière par le biais d'un distributeur de gaz, une phase gazeuse étant retirée en haut de la colonne de transfert de matière et une phase liquide étant retirée en bas de la colonne de transfert de matière, **caractérisée en ce que** la colonne de transfert de matière contient au moins un plateau selon l'une des revendications 1 à 10.

12. Colonne de transfert de matière selon la revendication 11, **caractérisée en ce qu'**elle comporte au moins deux plateaux selon l'une des revendications 1 à 12, lesquels sont toujours disposés alternativement de manière à ce qu'un plateau comporte une entrée et deux sorties et qu'un plateau immédiatement sus-jacent ou sous-jacent comporte deux entrées et une sortie, l'au moins une sortie d'un plateau formant l'entrée d'un plateau sous-jacent.
